(19) Europäisches Patentamt
European Patent Office
Office européen des brevets

(11) EP 3 316 549 B1

(12) FASCICULE DE BREVET EUROPEEN

(45) Date de publication et mention de la délivrance du brevet:
**11.10.2023 Bulletin 2023/41**

(21) Numéro de dépôt: **17198045.1**

(22) Date de dépôt: **24.10.2017**

(51) Classification Internationale des Brevets (IPC):
***H04L 9/40** (2022.01)* ***H04W 12/06** (2021.01)*
***H04W 12/08** (2021.01)* ***H04L 9/32** (2006.01)*

(52) Classification Coopérative des Brevets (CPC):
**H04L 63/08; H04L 63/0428**

# (54) PROCÉDÉ DE CONTRÔLE D'IDENTITÉ D'UN UTILISATEUR AU MOYEN D'UNE BASE DE DONNÉES PUBLIQUE

VERFAHREN ZUR IDENTITÄTSKONTROLLE EINES BENUTZERS VON MINDESTENS EINER ÖFFENTLICHEN DATENBANK

METHOD FOR VERIFYING THE IDENTITY OF A USER BY MEANS OF A PUBLIC DATABASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2016 FR 1660566**
**30.03.2017 FR 1752724**

(43) Date de publication de la demande:
**02.05.2018 Bulletin 2018/18**

(73) Titulaire: **Idemia Identity & Security France**
**92400 Courbevoie (FR)**

(72) Inventeurs:
- **CHABANNE, Hervé**
  **92130 Issy-les-Moulineaux (FR)**
- **CHENEVIER, Thomas**
  **92130 Issy-les-Moulineaux (FR)**
- **LAMBERT, Laurent**
  **92130 Issy-les-Moulineaux (FR)**
- **CLÉMOT, Olivier**
  **92130 Issy-les-Moulineaux (FR)**

(74) Mandataire: **Idemia**
**2, place Samuel de Champlain**
**92400 Courbevoie (FR)**

(56) Documents cités:
**WO-A1-2016/128906 US-A1- 2016 072 800**
**US-A1- 2016 105 414**

- **CHAUM D ET AL: "CRYPTOGRAPHICALLY STRONG UNDENIABLE SIGNATURES, UNCONDITIONALLY SECURE FOR THE SIGNER", ADVANCES IN CRYPTOLOGY. SANTA BARBARA, AUG. 11 - 15, 1991; [PROCEEDINGS OF THE CONFERENCE ON THEORY AND APPLICATIONS OF CRYPTOGRAPHIC TECHNIQUES (CRYPTO)], BERLIN, SPRINGER, DE, vol. -, 16 avril 1992 (1992-04-16), pages 470-484, XP000269044,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 316 549 B1

## Description

### DOMAINE DE L'INVENTION

La présente invention concerne un procédé de contrôle de l'identité d'un utilisateur.

### ETAT DE LA TECHNIQUE

Sont apparues ces dernières années des bases de données appelées « chaînes de blocs » (en anglais, « blockchain »).

Une base de données de type chaîne de blocs est distribuée entre plusieurs noeuds de stockage d'un réseau. Les noeuds de stockage sont configurés pour valider des données écrites dans la base de données par la mise en oeuvre d'une méthode de recherche de consensus entre les noeuds de stockage. Une telle méthode est par exemple la méthode connue de « preuve par le travail » (« proof of work » en anglais). Le contenu de la base de données est ainsi protégé contre des falsifications et ce malgré son caractère distribué.

La plus célèbre base de données de type « chaîne de blocs » est celle utilisée dans le système de transaction de monnaie électronique Bitcoin®. La base de données du système Bitcoin® contient un historique de toutes les transactions passées effectuées entre des comptes d'utilisateurs du système. La nécessité d'avoir recours à une entité centralisée telle qu'une banque pour authentifier des transactions est ainsi supprimée.

Il a toutefois été proposé d'utiliser une base de données de type « chaîne de blocs » à d'autres fins que la simple transaction de monnaie électronique.

Le MIT (Massachusetts Institute of Technology) a notamment proposé d'utiliser la base de données de type chaîne de blocs du système Bitcoin® pour prouver qu'une personne est détentrice d'un diplôme du MIT.

A cette fin, un serveur du MIT génère un diplôme électronique du MIT à partir d'au moins un élément d'identité d'une personne, par exemple le nom de la personne, son prénom et sa date de naissance.

Sont mémorisées, dans la base de données publique du système Bitcoin®, des données de transaction indiquant que le MIT a transféré un certain montant en Bitcoins à la personne. Les données de transaction comprennent par ailleurs un hash du diplôme électronique, de façon à indiquer que ladite transaction représente la délivrance d'un diplôme du MIT à cette personne. Le traitement permettant de générer le hash du diplôme du MIT à partir de l'élément d'identité est mis à disposition du public.

En effet, pour vérifier si une personne donnée a bien été diplômée du MIT, un potentiel employeur utilise ce traitement pour générer un hash de diplôme électronique témoin, et vérifie, dans la base de données du système Bitcoin®, s'il existe un hash de diplôme électronique non seulement contenu dans une transaction émise par le MIT mais également identique au diplôme électronique témoin généré par le tiers. Si oui, le candidat est bien diplômée du MIT, sinon ce n'est pas le cas.

Par exemple, le traitement en question peut prendre en entrée le ou chaque élément d'identité sous forme de chaînes de caractères respectives. Le traitement qui est fait ici de manière dématérialisée correspond à un remplissage de champs personnalisés dans un modèle de diplôme générique.

Il est entendu que le diplômé donne spontanément son élément d'identité à l'employeur de sorte que ce dernier puisse procéder à la vérification décrite ci-dessus.

Toutefois, certains tiers peuvent parvenir à la conclusion que la personne considérée est bien diplômée du MIT, sans autorisation de la personne.

En effet, une connaissance de la personne est susceptible de connaître les éléments d'identité le concernant (au moins son nom et son prénom). Cette connaissance peut ainsi mettre en oeuvre mettre en oeuvre les mêmes étapes que celles mises en oeuvre par l'employeur : utiliser le traitement mis à disposition du public pour générer un hash de diplôme électronique témoin et rechercher si le hash est contenu dans une transaction émise par le MIT.

Ceci pose un problème de confidentialité lié à la vie privée, car un diplômé du MIT peut très bien ne pas vouloir que n'importe qui ait accès à une telle information d'ordre privé.

Par ailleurs, le document US 2016/0072800 décrit différents systèmes pour sécuriser des transactions à l'aide de données génomiques. Le document US 2016/0105414 décrit un procédé d'authentification sur la base d'un jeton généré au moyen d'une fonction pseudo-homomorphe et d'un code PIN. Le document WO2016/128906 décrit un procédé de gestion de données biométriques. Le document « Crytographically Strong undeniable Signatures, Unconditionally Secure for the Signer », par David Chaum et al., décrit des procédés pour signer des données de manière sécurisée.

### EXPOSE DE L'INVENTION

Un but de l'invention est de contrôler l'identité d'un utilisateur, au moyen d'une base de données publique tout en résolvant le problème de confidentialité rencontré dans la solution proposée par le MIT.

Il est dès lors proposé, selon un premier aspect de l'invention, un procédé de contrôle d'identité d'un utilisateur, comprenant les étapes suivantes mises en oeuvre par un dispositif de contrôle d'identité :

- lecture dans une base de données publique de type chaîne de bloc d'éventuelles données protégées en confidentialité préalablement générées par un dispositif attesteur d'identité à partir d'un élément d'identité d'un utilisateur et à partir d'au moins une donnée d'aléa propre à l'utilisateur, les données protégées en confidentialité générées par le dispositif attesteur d'identité étant associées dans la base de données publique à des premières données de transaction indiquant que le dispositif attesteur d'identité a transféré un montant prédéterminé d'une monnaie électronique à un bénéficiaire,

- obtention, par le dispositif de contrôle d'identité, de données de preuve, les données de preuve ayant été préalablement générées par un dispositif client appartenant à l'utilisateur (U) à partir de l'élément d'identité de l'utilisateur (U) et de la donnée d'aléa propre à l'utilisateur (U), et les données de preuve étant obtenues par lecture des données de preuve dans la base de données publique,
- mise en oeuvre d'un traitement prédéterminé pour l'utilisateur seulement si les conditions suivantes sont remplies :
    - les données protégées en confidentialité générées par le dispositif attesteur d'identité sont associées dans la base de données publique à des premières données de transaction indiquant que le dispositif attesteur d'identité a transféré un montant prédéterminé d'une monnaie électronique à un bénéficiaire,
    - les données de preuve lues sont associées, dans la base de données publique, aux données protégées en confidentialité préalablement générées par le dispositif attesteur d'identité,
    - les données protégées en confidentialité trouvées et les données de preuve associées aux données protégées en confidentialité trouvées sont liées par une relation mathématique prédéterminée.

La base de données utilisée étant publique, les données protégées en confidentialité peuvent être lues par tout tiers. Toutefois, les données protégées en confidentialité dépendent non seulement d'au moins un élément d'identité d'un utilisateur mais également de la donnée d'aléa.

Un tiers connaissant l'utilisateur ne peut pas savoir si le traitement prédéterminé est mis en oeuvre ou non. En effet, même si ce tiers connaît les éléments d'identité de l'utilisateur utilisés par le dispositif attesteur d'identité pour générer les données protégées en confidentialité. Il lui faut en effet connaître également la donnée d'aléa.

Un avantage de l'invention est sa facilité d'implémentation. En effet, l'invention peut être facilement greffée sur une chaîne de blocs d'un système de gestion de monnaie électronique déjà déployée et dont le niveau de sécurité a été éprouvé, tel que Bitcoin®.

Ce greffage est matérialisé par l'association, dans une telle chaîne de blocs préexistante, des données protégées en confidentialité aux données de transaction indiquant que le dispositif attesteur d'identité a transféré un montant prédéterminé d'une monnaie électronique à un bénéficiaire. Cette association, facile à mettre en oeuvre, a pour effet de garantir que les données ont été protégées par le dispositif attesteur d'identité, et non par un autre dispositif.

Autrement dit, l'invention permet de contrôler l'identité d'un utilisateur via un procédé très facilement implémentable sur une chaîne de blocs existante, tout en bénéficiant des avantages techniques inhérents à ce type de base de données (haut niveau de protection contre des falsifications, décentralisation).

Le procédé selon le premier aspect de l'invention peut en outre comprendre les caractéristiques suivantes prises seules ou en combinaison lorsque cela est techniquement possible.

Les données de preuve peuvent être reçues par le dispositif de contrôle d'identité via un canal sécurisé établi directement entre le dispositif client et le dispositif de contrôle d'identité.

Les données protégées en confidentialité peuvent avoir été générées par application d'une fonction de hachage prédéterminée $H$ à des données $x_0, ..., x_n$, où :

- $n$ est un entier supérieur ou égal à 2,
- au moins l'un des $x_i$ est une donnée d'aléa propre à l'utilisateur, et chaque autre $x_i$ est un élément d'identité de l'utilisateur,

et dans lequel les données de preuve comprennent :

- une donnée c calculée par la formule : $c = h(H(A_0, ...,A_n))$ où $h$ est une fonction prédéterminée, et $A_0, ... , A_n$ sont $n$ données tirées aléatoirement,
- $n$ données de preuve $f_0, ... , f_n$ calculées par application des formules

$$\forall i \in [\![0,n]\!] \quad f_i = A_i + cx_i$$

auquel cas la relation mathématique prédéterminée peut être la suivante :

$$h\left(\frac{H(f_0, \ldots, f_n)}{\left(H(x_0, \ldots, x_n)\right)^c}\right) = c$$

Le bénéficiaire peut être l'utilisateur. Dans ce cas, les données de preuve peuvent être associées dans la base de données publique à des deuxièmes données de transaction indiquant que l'utilisateur a transféré au dispositif de contrôle d'identité le montant prédéterminé reçu du dispositif attesteur d'identité.

Le traitement prédéterminé peut être, comprendre ou déclencher un service prédéterminé à fournir à l'utilisateur, le procédé comprenant par ailleurs une génération et mémorisation dans la base de données publique, de données de confirmation indiquant que le service a été fourni à l'utilisateur.

Les données de confirmation générées peuvent être associées dans la base de données publique à des troisièmes données de transaction indiquant qu'un dispositif fournisseur de service ayant fourni le service à l'utilisateur a transféré au dispositif attesteur d'identité le montant prédéterminé.

Le procédé selon le premier aspect peut en outre comprendre des étapes de

- après que le traitement prédéterminé a été mis en oeuvre par le dispositif de contrôle d'identité, génération par le dispositif attesteur d'identité de nouvelles données protégées en confidentialité à partir de l'élément d'identité de l'utilisateur et d'au moins une nouvelle donnée d'aléa propre à l'utilisateur,
- mémorisation des nouvelles données protégées en confidentialité dans la base de données publique de sorte qu'une nouvelle mise en oeuvre de l'étape de vérification utilise les nouvelles données protégées en confidentialité à la place des données protégées en confidentialité.

La génération des données protégées en confidentialité peut comprendre un hachage cryptographique appliqué à l'élément d'identité et à la donnée d'aléa.

Les données protégées en confidentialité peuvent être obtenues par application de la formule :

$$\prod_{i=0}^{n} {G_i}^{x_i}$$

où :

- $n$ est un entier supérieur ou égal à 2,
- au moins l'un des $x_i$ est une donnée d'aléa propre à l'utilisateur, et chaque autre $x_i$ est un élément d'identité de l'utilisateur,
- $G_i$ sont des éléments prédéterminés d'un groupe fini, par exemple des points de courbe elliptique ou des éléments d'un groupe cyclique.

Les données protégées en confidentialité peuvent être signées numériquement au moyen d'une clé privée propre au dispositif attesteur d'identité, avant leur mémorisation dans la base de données publique.

Le procédé peut en outre comprendre des étapes de :

- signature électronique des données de preuve au moyen d'une clé privée propre à l'utilisateur, avant leur mémorisation dans la base de données publique,
- accès, par le dispositif de contrôle d'identité, aux données de preuve de service par déchiffrement des données de preuves signées mémorisées dans la base de données publique, au moyen d'une clé publique propre à l'utilisateur.

Le traitement prédéterminé peut être mis en oeuvre par le dispositif de contrôle d'identité seulement si le dispositif de contrôle d'identité ne trouve pas, dans la base de données publique, de données de révocation indiquant que la clé privée de l'utilisateur a été révoquée par le dispositif attesteur d'identité.

Il est en outre proposé, selon un deuxième aspect de l'invention, un produit programme d'ordinateur comprenant des instructions de code de programme pour l'exécution des étapes du procédé selon le premier aspect de l'invention, lorsque ce programme est exécuté par au moins un processeur.

Il est en outre proposé, selon un troisième aspect de l'invention, un dispositif de contrôle d'identité selon la revendication indépendante 11.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente de manière schématique un système de fourniture d'un service, selon un mode de réalisation.
- La figure 2 est un organigramme d'étapes d'un procédé de fourniture d'un service mis en oeuvre par le système représenté en figure 1, selon un mode de réalisation.

Sur l'ensemble des figures, les éléments similaires portent des références identiques.

## DESCRIPTION DETAILLEE DE L'INVENTION

### *Système de fourniture de service en fonction d'un élément d'identité*

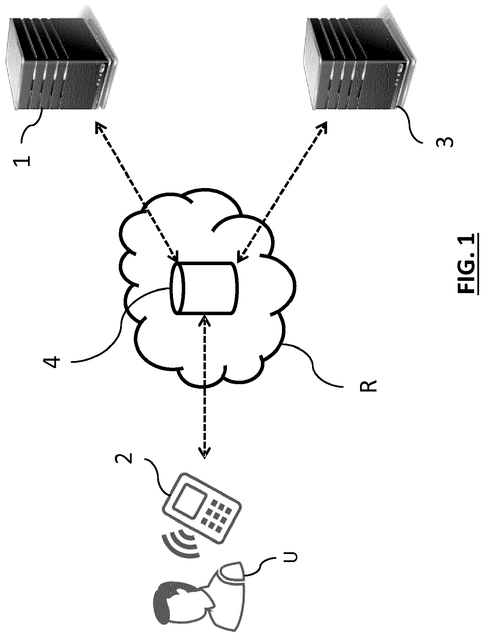

En référence à la **figure 1,** un système de fourniture de service comprend un dispositif attesteur d'identité 1, un dispositif client 2 et un dispositif de contrôle d'identité 3.

Les trois dispositifs 1, 2, 3 communiquent entre eux par l'intermédiaire d'au moins un réseau R, par exemple le réseau Internet, un réseau cellulaire, ou une combinaison de tels réseaux.

Les trois dispositifs 1, 2, 3 ont chacun accès en lecture et en écriture à une base de données 4 stockée dans le réseau R.

La base de données 4 est publique, au sens où elle est libre d'accès en lecture non seulement par les dispositifs 1, 2, 3 en présence mais également à tout autre dispositif tiers. Tout dispositif tiers peut en particulier consulter les données écrites par l'un des dispositifs 1, 2, 3.

Ainsi, le dispositif attesteur d'identité 1 dispose d'un compte d'accès en lecture et en écriture dans la base de données 4. A cet effet, le dispositif attesteur d'identité 1 mémorise deux clés mutuellement associées: une clé privée de signature, propre au dispositif 1 et une clé publique de vérification de signature également propre au dispositif 1. La clé privée permet au dispositif 1 d'écrire des données signées dans la base de données ; elle est destinée à ne pas être communiquée à des tiers. La clé publique permet au dispositif 1 (et à tout autre titulaire d'un compte d'accès à la base de données 4) de vérifier qu'une donnée présente dans la base de données 4 a été écrite dans celle-ci par le dispositif 1.

Le dispositif de contrôle d'identité 3 dispose également d'un compte d'accès en lecture et en écriture dans la base de données 4. Comme pour le dispositif attesteur d'identité 1, le dispositif de contrôle d'identité 3 mémorise une clé publique et une clé privée mutuellement associées et qui lui sont propres.

La base de données 4 est distribuée ou décentralisée dans le réseau R, c'est-à-dire qu'elle est stockée par une pluralité de noeuds du réseau R avec lesquels les dispositifs 1, 2, 3 peuvent communiquer.

La base de données 4 est une base de données de type « chaîne de blocs ». Dans le présent texte, on définit une base de données de type « chaîne de blocs » comme une base de données mémorisée par une pluralité de noeuds de stockage configurés pour valider des données écrites dans la base de données par la mise en oeuvre d'une méthode de recherche de consensus entre les noeuds de stockage. Une telle méthode est par exemple la méthode connue de « preuve par le travail » (« proof of work » en anglais). Le contenu de la base de données 4 est ainsi protégé contre des falsifications et ce malgré son caractère distribué / décentralisé.

Dans ce qui suit, on prendra l'exemple d'une base de données 4 conforme à celle utilisée par le système de transaction Bitcoin®. Ainsi, sont susceptible d'être mémorisées dans la base de données 4 des données représentatives d'une transaction, depuis l'un des dispositifs 1, 2, 3 à un autre de ces dispositifs 1, 2, 3, d'un certain montant en Bitcoins.

Chacun des trois dispositifs 1, 2, 3 comprend au moins un processeur configuré pour procéder à des calculs de données et une interface de communication pour communiquer avec les autres dispositifs et la base de données 4.

La fonction principale assurée par le dispositif attesteur d'identité 1 est d'attester du caractère agréé ou non d'un utilisateur. Le dispositif attesteur d'identité 1 pourrait ainsi être utilisé en France par l'Agence Nationale des Titres Sécurisés (ANTS) ou l'Imprimerie Nationale, ces organismes ayant pour objet de répondre à un tel besoin. Le dispositif 1 peut toutefois être géré par une société privée, par exemple une compagnie aérienne (exemple qui sera développé dans ce qui suit).

La fonction principale du dispositif de contrôle d'identité 3 est, comme son nom l'indique, de contrôler l'identité d'un utilisateur.

Le dispositif de contrôle est configuré pour mettre en oeuvre ou non un traitement prédéterminé pour le compte d'un utilisateur, en fonction du résultat d'un contrôle d'identité qu'il a mis en oeuvre sur cet utilisateur.

Par exemple, le dispositif de contrôle est configuré pour fournir un service prédéterminé à un utilisateur agréé par le dispositif 1. Dans ce cas, le traitement prédéterminé mis en oeuvre ou non selon le résultat d'un contrôle de l'identité d'un utilisateur est une fourniture ou non de ce service à cet utilisateur. Par exemple, le dispositif de contrôle d'identité 3 est un dispositif de gestion de comptes de voyageurs de la compagnie aérienne susmentionnée. Ce dispositif 3 est alors par exemple adapté pour attribuer ou retirer des points de voyages à un voyageur donné, et lui attribuer des avantages de voyage.

Alternativement, le dispositif de contrôle 3 est adapté pour communiquer avec un dispositif fournisseur de service distinct. Dans ce cas, le traitement prédéterminé peut comprendre l'envoi au dispositif fournisseur de service d'un message indiquant si un utilisateur venant d'être contrôlé par le dispositif de contrôle a le droit ou non de se voir fournir un service par le dispositif fournisseur de service.

Le traitement prédéterminé peut alternativement ou à titre complémentaire comprendre une augmentation d'un niveau de réputation d'un utilisateur agréé par le dispositif attesteur d'identité 1 auprès d'un organisme tiers. Cette notion de réputation par exemple utilisé par des banques ou des assureurs pour évaluer le profil de leurs clients. Cette augmentation peut typiquement être faite par incrémentation d'une donnée représentative d'un niveau de réputation, mis en oeuvre par le dispositif de contrôle 3 et/ou par le dispositif fournisseur

Le dispositif client 2 est par ailleurs un dispositif destiné à être manipulé par un utilisateur U susceptible de demander à se voir rendre un service par le dispositif de contrôle d'identité 3. Le dispositif client 2 est par exemple un smartphone ou un ordinateur portable.

***Procédé de fourniture de service en fonction de l'identité d'un utilisateur***

Dans ce qui suit, on considérera à titre non limitatif que le dispositif de contrôle 3 est apte à rendre un service à un utilisateur agréé (il est en d'autres termes un dispositif fournisseur de service).

Il est en outre supposé dans ce qui suit qu'est mémorisée par le dispositif client 2 une application de gestion configurée pour établir un canal de communication avec le dispositif 1 et un canal de communication avec le dispositif 3 (par exemple via le réseau R). Une telle application peut être téléchargée à l'initiative de l'utilisateur U.

Les deux canaux de communications sont indépendants la base de données 4, c'est-à-dire que des données ou messages qui transitent par l'un quelconque de ces canaux ne sont pas écrites dans la base de données 4.

Dans une étape 100, l'utilisateur U est enrôlé auprès du dispositif attesteur d'identité 1.

Selon une première variante de l'étape d'enrôlement 100, l'utilisateur U s'adresse à un guichet de la compagnie aérienne et fournit oralement au moins un élément d'identité le concernant.

Selon une deuxième variante de l'étape d'enrôlement 100, l'application affiche un message sur un écran du dispositif client 2 invitant l'utilisateur U à saisir au moins un élément d'identité le concernant. Le ou chaque élément d'identité saisi par l'utilisateur U dans son dispositif client 2 est transmis au dispositif attesteur d'identité 1 via le canal de communication établi par l'application entre les dispositifs 1 et 2.

Un ou plusieurs éléments d'identité de l'utilisateur U peuvent être ainsi fourni(s) au dispositif attesteur d'identité 1.

Un élément d'identité de l'utilisateur U peut être un élément d'état civil de l'utilisateur U (nom, prénom, date de naissance, lieu de naissance, etc.). Un élément d'identité peut être en outre une information indiquant si l'utilisateur est majeur ou non. Un élément d'identité peut plus généralement être toute information personnelle de l'utilisateur U (par exemple : numéro de passeport, numéro de carte d'identité, etc.).

On comprend aisément qu'un élément d'identité est plus ou moins porteur d'informations. Il est dès lors possible de définir des ensembles d'éléments d'identités à traiter, lesquels sont associés à des niveaux de confidentialité respectifs :

- éléments d'identité de niveau 1 : majorité de l'utilisateur U
- éléments d'identité de niveau 2 : éléments d'identités de niveau 1 + nom de l'utilisateur U
- éléments d'identités de niveau 3 : éléments d'identités de niveau 2 + adresse de l'utilisateur U.

Par ailleurs, l'enrôlement comprend la création un compte d'accès en lecture et en écriture dans la base de données 4 pour l'utilisateur U. La création du compte comprend l'attribution à l'utilisateur U de deux clés mutuellement associées ayant les mêmes fonctions que celles dont disposent les dispositifs 1 et 3: une clé privée de signature, propre à l'utilisateur U et une clé publique de vérification de signature également propre à l'utilisateur U.

Typiquement, l'application génère elle-même la paire de clés de l'utilisateur U et la clé publique est communiquée de manière privilégiée au dispositif attesteur d'identité 1.

Les deux clés de l'utilisateur U sont mémorisées par dans une mémoire du dispositif client 2 sur commande de l'application.

Dans ce qui suit, toute donnée écrite dans la base de données 4 à la demande d'une entité titulaire d'un compte d'accès à la base de données 4 est implicitement signée avant son écriture au moyen de la clé privée propre à cette entité. En outre, toute donnée signée lue dans la base de données 4 par une tiers titulaire d'un compte d'accès à la base de données 4 est implicitement vérifiée au moyen de la clé publique propre à l'entité, de sorte à obtenir la donnée originellement fournie par l'entité.

Au moins une donnée d'aléa associée à l'élément d'identité fourni par l'utilisateur U est par ailleurs générée (étape 102).

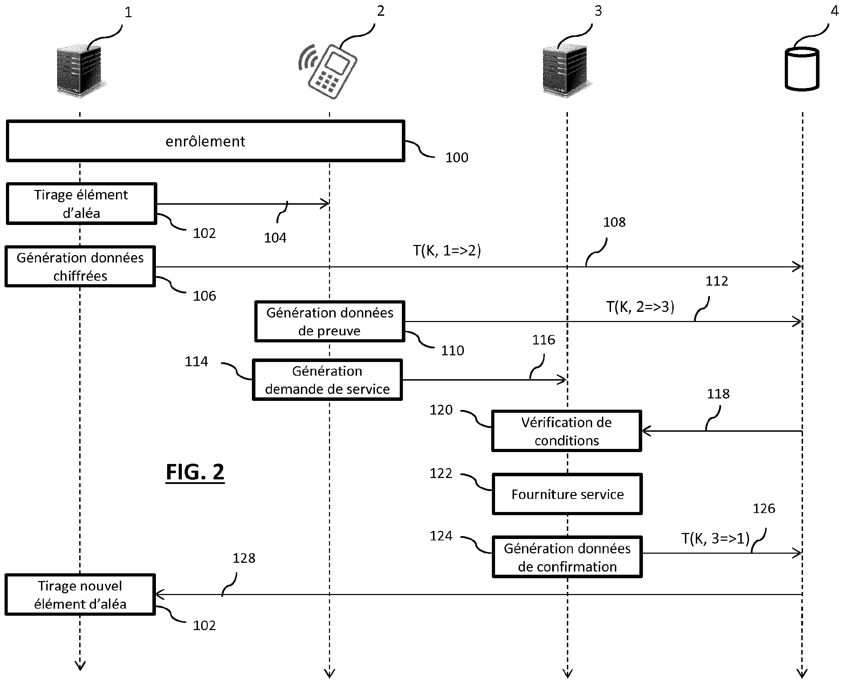

Cette donnée d'aléa peut être générée par le dispositif attesteur d'identité 1 comme illustré en figure 2, auquel cas la donnée d'aléa est transmise du dispositif attesteur d'identité 1 au dispositif client 2 (étape 104). Alternativement, la donnée d'aléa peut être générée par le dispositif client 2 (auquel cas le dispositif client 2 transmet la donnée d'aléa au dispositif attesteur d'identité 1).

Dans la suite, $x_0$ désigne la donnée d'aléa, et $x_1$ à $x_n$ sont $n$ éléments d'identité fournis au dispositif attesteur d'identité 1, $n$ étant supérieur ou égal à 1. L'ensemble des éléments d'identités $x_1$ à $x_n$ peut par exemple être l'un ou l'autre des ensembles d'identité de niveau 1, 2 ou 3 définis précédemment.

Le dispositif attesteur d'identité 1 génère des données protégées en confidentialité à partir d'au moins un élément d'identité et de la donnée d'aléa (étape 106). « Par protégées en confidentialité » on entend que l'élément d'identité et la donnée d'aléa n'apparaissent pas en clair dans les données protégées en confidentialité.

De façon générale, la génération 106 des données protégées en confidentialité peut être vue comme l'application d'une fonction prédéterminée $H$ aux éléments d'identité et à la donnée d'aléa. Les données protégées en confidentialité peuvent ainsi s'écrire : $H(x_0, \ldots, x_n)$.

Dans ce qui suit, on détaillera un mode de réalisation dans lequel les données protégées en confidentialité sont des données hachées : en d'autres termes, la fonction prédéterminé H est une fonction de hachage. Les données hachées sont également appelées « empreinte » ou « hash » dans la littérature.

La fonction de hachage H présente plusieurs avantages. La valeur du résultat de son application ne peut pas être prédéterminé. En outre, la fonction H est difficile à inverser si bien qu'il est quasiment impossible de remonter aux antécédents de la fonction H à partir des données hachées $H(x_0, \ldots, x_n)$, ou de trouver deux antécédents ayant la même image Est développé dans la suite un mode de réalisation particulier de l'invention dans lequel les données hachées sont obtenues par application de la formule suivante :

$$H(x_0, \ldots, x_n) = \prod_{i=0}^{n} {G_i}^{x_i}$$

où les termes $G_i$ sont des éléments prédéterminés d'un groupe fini, par exemple des points de courbe elliptique ou des éléments d'un groupe cyclique. Les termes $G_i$ sont également connus du dispositif client 2 et du dispositif de contrôle d'identité 3.

Le dispositif attesteur d'identité 1 commande la mémorisation des données hachées $H(x_0, ... , x_n)$ dans la base de données 4 d'une façon propre à indiquer à tout tiers que les données hachées ont été générées par le dispositif attesteur d'identité 1 (étape 108). Cette indication matérialise le fait que les données hachées ont été générées sur la base d'un utilisateur (ici U) agréé par le dispositif attesteur d'identité 1. Comme on le verra par la suite, un traitement prédéterminé sera mis en oeuvre au bénéfice d'un utilisateur seulement si cet utilisateur s'avère avoir été agréé par le dispositif attesteur d'identité 1. Par exemple, un utilisateur agréé pourra se voir rendre un service par le dispositif de contrôle d'identité 3 (ou un dispositif fournisseur de service distinct du dispositif de contrôle d'identité 3) tandis qu'un utilisateur non agréé ne pourra pas avoir accès à un tel service.

Lorsqu'un système de gestion de monnaie électronique telle que Bitcoin® est utilisé, une telle indication peut être obtenue au moyen d'une transaction d'un certain montant de la monnaie électronique depuis le dispositif attesteur d'identité 1 au bénéfice du dispositif client 2.

Le dispositif attesteur d'identité 1 génère par exemple des premières données de transaction T(K,1=>2) propres à indiquer que le dispositif attesteur d'identité 1 transfère à l'utilisateur U un montant K prédéterminé de monnaie électronique, par exemple K Bitcoins. L'utilisateur U bénéficiaire de la transaction est identifié par sa clé publique, qui lui a été fournie lors de la création de son compte d'accès à la base de données 4.

Le dispositif attesteur d'identité 1 commande alors la mémorisation 108, dans la base de données 4, des premières données de transaction et des données hachées. Les premières données de transaction sont mises en association avec la clé publique de l'utilisateur U dans la base de données 4, de sorte à indiquer à un tiers accédant à la base de données 4 que cet utilisateur U est le bénéficiaire des K Bitcoins transféré par le dispositif attesteur d'identité 1.

Cette association est par exemple une inclusion des données hachées $H(x_0, ... , x_n)$ dans les premières données de transaction. Lorsque le système Bitcoin® est utilisé, les premières données de transaction comprennent un champ OP_RETURN qui peut être utilisé pour stocker les données hachées.

Plus tard, l'utilisateur U souhaite accéder au service rendu par le dispositif de contrôle d'identité 3. A cet effet, l'application génère une demande de service (étape 114), et commande l'envoi de la demande générée par le dispositif client 2 de l'utilisateur U au dispositif de contrôle d'identité 3, via un canal préalablement établi entre les dispositifs 2 et 3 (étape 116).

Sur réception de cette demande, le dispositif de contrôle d'identité 3 accède en lecture à la base de données 4, et y recherche d'éventuelles données hachées préalablement générées par le dispositif attesteur d'identité 1 à partir d'un élément d'identité de l'utilisateur U et à partir d'au moins une donnée d'aléa propre à l'utilisateur U.

Si de telles données hachées sont trouvées dans la base de données 4, le dispositif de contrôle d'identité vérifie si une condition sur les données hachées est remplie.

Si la condition est remplie, le dispositif de contrôle d'identité 3 fournit le service demandé au dispositif client 2 (étape 122). Le dispositif de contrôle d'identité 3 déduit en effet des données hachées que l'utilisateur demandeur a été préalablement agréé par le dispositif attesteur d'identité 1.

Si la condition n'est pas remplie, le dispositif de contrôle d'identité 3 ne fournit pas le service demandé au dispositif client 2. Dans ce cas, le dispositif fournisseur 3 déduit en effet de l'absence de données hachées sur la base d'un élément d'identité de l'utilisateur demandeur que cet utilisateur demandeur U n'a pas été agréé par le dispositif attesteur d'identité 1.

Dans le cas de l'utilisateur U, le service est bien rendu puisque des données hachées $H(x_0, ... , x_n)$ ont bien été générées par le dispositif attesteur d'identité 1 puis mémorisées à la demande de ce dernier dans la base de données 4.

En d'autres termes, le dispositif de contrôle d'identité 3 ne rend un service à un utilisateur demandeur seulement si cet utilisateur a été agréé par le dispositif attesteur d'identité 1. On peut remarquer que le dispositif de contrôle d'identité 3 n'a pas eu à communiquer directement avec le dispositif attesteur d'identité 1 pour décider si le service est à fournir ou non à l'utilisateur demandeur ; il n'a eu qu'à inspecter le contenu de la base de données 4. Un avantage de cette solution est sa souplesse d'utilisation : le dispositif de contrôle d'identité 3 peut prendre une décision relative à la demande de service formulée même lorsque le dispositif attesteur d'identité n'est pas disponible (éteint, non branché au réseau, ou tout simplement défaillant).

Par ailleurs, l'utilisation de la base de données 4 de type « blockchain » permet un déploiement très simple du procédé. Les dispositifs 1, 2, 3 n'ont besoin que d'une configuration minimale (notamment la création de comptes d'accès à la base de données 4), la sécurité du procédé en termes de protection contre des falsifications étant assurée par la base de données 4. L'utilisation de la base de données d'un système de transaction tel que Bitcoin® ou équivalent est particulièrement aisée à mettre en oeuvre.

De plus, aucun élément d'identité n'a été directement écrit en clair dans la base de données 4. Seules les données hachées sont mémorisées dans la base de données 4. Or, comme les données hachées dépendent non seulement d'au moins un élément d'identité mais également d'une donnée d'aléa, il est impossible pour un tiers - connaissant l'élément d'identité de l'utilisateur U - de conclure que l'utilisateur U a été agréé par le dispositif attesteur d'identité 1 sans connaître également l'élément d'aléa, par simple accès à la base de données 4 qui est publique.

*Premier mode de réalisation*

La figure 2 illustre un premier mode de réalisation, dans lequel le dispositif client 2 détecte que la base de données 4 contient les premières données de transactions indiquant que K Bitcoins ont été transférés à l'utilisateur U.

Suite à cette détection, le dispositif client 2 génère des données de preuve qui dépendent de l'élément d'identité de l'utilisateur U et de la donnée d'aléa $x_0$ propre à l'utilisateur U (étape 110).

Par exemple, les données de preuve comprennent une première donnée de preuve c et $n$ données de preuve $f_0, \ldots, f_n$, lesquelles sont calculées comme suit :

$$c = h\big(H(A_0, \ldots, A_n)\big) = h\left(\prod_{i=0}^{n} {G_i}^{A_i}\right)$$

où $h$ est une fonction de hachage prédéterminée (par exemple différente de la fonction $H$), et $A_0, \ldots, A_n$ sont $n$ données tirées aléatoirement ; et

$$\forall i \in [\![0, n]\!] \quad f_i = A_i + c x_i$$

Le dispositif client 2 commande la mémorisation, dans la base de données 4, les données de preuve c, $f_0, \ldots, f_n$ de façon à indiquer que les données de preuve ont été générées par le dispositif client 2 (étape 112).

Les données c, $f_0, \ldots, f_n$ de preuve sont par ailleurs associées, dans la base de données 4, aux données hachées $H(x_0, \ldots, x_n)$ préalablement générées par le dispositif attesteur d'identité 1, de façon à indiquer que les données de preuve et les données hachées associées ont été générées à partir des même éléments d'identité $x_1, \ldots, x_n$ et de la même donnée d'aléa $x_0$ (propres à l'utilisateur U).

Lorsqu'un système de gestion de monnaie électronique telle que Bitcoin® est utilisé, une telle indication peut être obtenue au moyen d'au moins une transaction vers le dispositif attesteur d'identité 1 couvrant le montant de monnaie électronique que l'utilisateur U a reçu du dispositif attesteur d'identité 1. A cet effet, le dispositif client 2 génère des deuxièmes données de transaction T(K,2=>3) indiquant que l'utilisateur demandeur U transfert au dispositif de contrôle d'identité 3 le montant prédéterminé K reçu du dispositif attesteur d'identité 1. Le dispositif client 2 commande alors la mémorisation 112, dans la base de données 4, des deuxièmes données de transaction et des données de preuve. Les deuxièmes données de transaction sont mises en association dans la base de données 4 avec la clé publique du dispositif de contrôle d'identité 3, de sorte à indiquer que le dispositif de contrôle d'identité 3 est le bénéficiaire des K Bitcoins transférés par le dispositif client 2.

Cette association est par exemple une inclusion des données de preuve dans les deuxièmes données de transaction. Lorsque le système Bitcoin® est utilisé, les deuxièmes données de transaction comprennent un champ OP_RETURN qui peut être utilisé pour stocker les données de preuve.

Il se peut que les données de preuve soient trop volumineuses pour être mémorisées dans un seul champ OP_RETURN. Dans ce cas, le dispositif client 2 génère puis commande la mémorisation dans la base de données 4 de plusieurs deuxièmes données de transactions, la somme des montants des deuxièmes transactions étant égale à K.

Les étapes 110, 112 qui précèdent sont mises en oeuvre avant l'envoi par le dispositif client 2 de la demande de service au dispositif de contrôle d'identité 3. Par exemple, le dispositif client 2 envoie la demande de service juste après avoir eu confirmation que les deuxièmes données de transactions ont été mémorisées dans la base de données 4.

Le dispositif fournisseur 3 détecte que la base de données 4 contient les deuxièmes données de transactions, indiquant que K Bitcoins lui ont été transférés par le dispositif client 2.

Cette détection est par exemple mise en oeuvre par le dispositif fournisseur 3 en réponse à la réception de la demande de service émise par le dispositif client 2 au cours de l'étape 114.

Le dispositif de contrôle d'identité 3 accède en lecture à la base de données 4, et télécharge les données de preuve associées aux deuxièmes données de transactions le désignant comme bénéficiaire de K Bitcoins (étape 118). Il lui suffit pour cela de lire le contenu du champ OP_RETURN des deuxièmes données de transaction T(K,2=>3).

Le dispositif de contrôle d'identité 3 a donc à ce stade connaissance des données de preuve c, $f_0, \ldots, f_n$. Par ailleurs, comme indiqué plus haut, le dispositif de contrôle d'identité 3 a également connaissance de la fonction $H$. Il est également supposé que le dispositif de contrôle d'identité 3 connaît la fonction $h$.

Le dispositif de contrôle d'identité 3 vérifie si deux conditions sont cumulativement remplies (étape 120) : une première condition et une deuxième condition.

La première condition à remplir est l'existence, dans la base de données 4, de données de preuve qui ont été d'une part générées par le dispositif client 2 et qui sont d'autre part associées à des données hachées par le dispositif attesteur d'identité 1.

Dans le cas où le système Bitcoin® est utilisé, le dispositif de contrôle d'identité 3 détermine simplement la provenance des K bitcoins qu'il a reçus. S'il existe, dans la base de données 4, des données de transaction indicatives du transfert des K bitcoins du dispositif attesteur d'identité 1 au dispositif client 2, alors le dispositif de contrôle d'identité 3 lit le contenu du champ OP_RETURN desdites données de transaction et considère qu'il s'agit de données hachées générées par le dispositif attesteur d'identité 1.

Dans le cas de l'utilisateur U, les K bitcoins transférés par le dispositif client 2 au dispositif de contrôle d'identité 3 dans les deuxièmes données de transaction T(K,2=>3) avaient été préalablement transférés par le dispositif attesteur d'identité 1 au dispositif client 2 dans les premières données de transaction T(K,1=>2). Le dispositif fournisseur d'accès 3 lit ainsi le contenu du champ OP_RETURN des premières données de transaction pour obtenir les données hachées.

A ce stade, le dispositif de contrôle d'identité connaît les données de preuve mais également les données hachées auxquelles les données de preuves sont associées.

La deuxième condition à remplir est que les données hachées éventuellement trouvées et les données de preuve associées aux données hachées éventuellement trouvées doivent être liées par une relation mathématique prédéterminée.

La relation mathématique prédéterminée est la suivante :

$$h\left(\frac{H(f_0, \dots, f_n)}{\left(H(x_0, \dots, x_n)\right)^c}\right) = c$$

Par exemple, dans le cas où $H(x_0, \dots, x_n) = \prod_{i=0}^{n} G_i^{x_i}$ cette relation mathématique prédéterminée devient :

$$h\left(\frac{\prod_{i=0}^{n} G_i^{f_i}}{\left(\prod_{i=0}^{n} G_i^{x_i}\right)^c}\right) = c$$

Le dispositif de contrôle d'identité 3 fournit le service demandé par le dispositif client 2 seulement si les deux conditions sont cumulativement remplies (étape 122).

Si les deux conditions ne sont pas cumulativement remplies, le dispositif de contrôle d'identité 3 ne fournit par le service demandé par le dispositif client 2.

Un avantage de ce premier mode de réalisation est que le dispositif de contrôle d'identité 3 peut déterminer si un utilisateur U a été agréé ou non par le dispositif attesteur d'identité 1, sans avoir eu besoin de connaître les valeurs des termes $x_i$ (éléments d'identité et donnée d'aléa). Le dispositif fournisseur 3 n'a en effet utilisé que les données hachées et les données de preuve mémorisées dans la base de données 4.

Bien entendu, d'autres données de preuves et d'autres relations mathématiques que celles présentées ci-dessus peuvent être utilisées pour conditionner la fourniture du service par le dispositif 3, par exemple celles décrites dans le document « Rethinking Public Key Infrastructures and Digital Certificates: Building in Privacy », par Stefan Brands.

*Deuxième mode de réalisation*

Dans un deuxième mode de réalisation non illustré, plus simple de mise en oeuvre que le premier mode de réalisation, les valeurs des termes $x_i$ (éléments d'identité et donnée d'aléa) sont fournis au dispositif de contrôle d'identité 3 par l'utilisateur demandeur U. Les valeurs des termes $x_i$ sont par exemple transmises par le dispositif client 2 au dispositif de contrôle d'identité 3.

Le dispositif de contrôle d'identité 3 génère des données hachées à partir de l'élément d'identité de l'utilisateur demandeur U et de la donnée d'aléa propre à l'utilisateur demandeur U qui lui ont ainsi été fournis. Le dispositif 3 utilise pour cela la fonction $H$ dont il a connaissance.

Le dispositif de contrôle d'identité 3 accède par ailleurs en lecture à la base de données 4, et vérifie par ailleurs si la base de données 4 contient des données hachées à la fois indiquées comme ayant été générées par le dispositif attesteur d'identité 1 et égales aux données hachées générées par le dispositif de contrôle d'identité 3.

Si tel est le cas, le dispositif de contrôle d'identité 3 fournit le service demandé dans l'étape 122. Sinon, le dispositif de contrôle d'identité 3 rejette la demande de service.

*Etapes postérieures à la fourniture du service*

Après que le service a été rendu par le dispositif de contrôle d'identité 3 à l'utilisateur demandeur U au cours de l'étape 122, le dispositif de contrôle d'identité 3 génère des données de confirmation indiquant que le service a été fourni à l'utilisateur demandeur U (étape 124).

Ces données de confirmation sont mémorisées dans la base de données 4 sur commande du dispositif de contrôle d'identité 3 (étape 126).

Lorsqu'un système de gestion de monnaie électronique telle que Bitcoin® est utilisé, les données de confirmation générées par le dispositif de contrôle d'identité 3 sont associées dans la base de données 4 à des troisièmes données de transaction T(K,3=>1) indiquant que le dispositif fournisseur d'accès 3 a transféré au dispositif attesteur d'identité 1 le montant K reçu du dispositif client 2.

Ainsi le dispositif attesteur d'identité 1 se voit crédité du montant K qu'il avait précédemment dépensé.

Les troisièmes données de transaction sont générées par le dispositif de contrôle d'identité 3 et sont similaires aux première et deuxième données de transaction. Lorsque le système Bitcoin® est utilisé, les troisièmes données de transaction comprennent un champ OP_RETURN qui peut être utilisé pour stocker les données de confirmation.

Le dispositif attesteur d'identité 1 peut ainsi être informé du fait que le dispositif de contrôle d'identité 3 a rendu un service à un utilisateur U qu'il a précédemment agréé, sans pour autant communiquer directement avec le dispositif de contrôle d'identité 3 puisqu'il suffit au dispositif attesteur d'identité 1 de lire (étape 128) les données de confirmation contenues dans la base de données 4 qui sont associées aux troisièmes données de transaction, et de déchiffrer les données de confirmation signées au moyen d'une clé publique propre au dispositif de contrôle d'identité 3.

De préférence, l'élément d'aléa est à usage unique. Ainsi, même si un tiers malveillant devait apprendre l'élément d'aléa propre à l'utilisateur U, il ne pourrait pas l'utiliser plusieurs fois auprès du dispositif de contrôle d'identité 3.

Par exemple, après que le service a été rendu par le dispositif de contrôle d'identité 3 à l'utilisateur U, le dispositif attesteur d'identité 1 tire aléatoirement une nouvelle donnée d'aléa propre à l'utilisateur U (étape 102), puis génère de nouvelles données hachées à partir de l'élément d'identité de l'utilisateur demandeur U et à partir de la nouvelle donnée d'aléa (étape 106), et commande la mémorisation des nouvelles données hachées dans la base de données 4 de sorte qu'une nouvelle mise en oeuvre de l'étape d'établissement de preuve utilise les nouvelles données hachées à la place des données hachées préalablement.

Il peut également être fait en sorte d'attribuer à l'utilisateur U une nouvelle paire de clés publique et privée après que le service a été rendu par le dispositif de contrôle d'identité 3 à l'utilisateur U. La nouvelle paire de clés peut être générée par l'application exécutée par le dispositif client 2 sur requête du dispositif attesteur d'identité 1, ou bien être générée par le dispositif attesteur d'identité 1 puis transmise par ce dernier au dispositif client 2 via le réseau R.

Comme indiqué précédemment, le dispositif client 2 est destiné à être manipulé par l'utilisateur U. En cas de vol du dispositif client 2, un utilisateur U non agréé pourrait tenter d'obtenir un accès au service rendu par le dispositif 3 en se faisant passer pour le possesseur réel du dispositif client 2. Aussi, il est avantageux de mémoriser dans la base de données 4 des données de révocation indiquant que l'utilisateur demandeur U a été révoqué par le dispositif attesteur d'identité 1. Cette mémorisation est typiquement commandée par le dispositif attesteur d'identité 1.

Ainsi, le service sera fourni par le dispositif de contrôle d'identité 3 seulement si le dispositif de contrôle d'identité 3 ne trouve pas, dans la base de données 4, de données de révocation indiquant que la clé privée de l'utilisateur demandeur U a été révoquée par le dispositif attesteur d'identité 1.

Les données de révocation sont par exemple mémorisées dans la base de données 4 au même format que les données hachées. Dans le cas où le système Bitcoin® est utilisé, le dispositif attesteur d'identité 1 génère des quatrièmes données de transaction indiquant le transfert de K bitcoins à l'utilisateur à révoquer (ici U). Le champ OP_RETURN des quatrièmes données de transaction contient les données de révocation. Les données de révocation sont par exemple une chaîne de caractère prédéterminée, par exemple « REVOKED ». Comme indiqué précédemment, le dispositif de contrôle d'identité 3 lit les données hachées dans la base de données 4 avant de fournir le service demandé par l'utilisateur demandeur U.

En plus des conditions énoncées dans le premier mode de réalisation et le deuxième mode de réalisation décrits ci-dessus, le dispositif de contrôle d'identité 3 vérifie si les données se trouvant dans le champ OP_RETURN de données de transaction lui transférant K bitcoins contiennent les données de révocation. Si oui, alors le service n'est pas fourni.

Le procédé décrit ci-dessus n'est bien entendu pas limité à une base de données 4 de gestion de transaction de monnaie électronique, encore moins au système Bitcoin®.

Le procédé est bien évidemment applicable à tout type traitement prédéterminé à accomplir ou non en fonction de l'identité de l'utilisateur demandeur U, que ce soit par le dispositif de contrôle d'identité 3 lui-même ou bien par un autre dispositif avec lequel le dispositif de contrôle d'identité 3 communique.

Le procédé trouve avantageusement application pour augmenter la réputation d'un utilisateur agréé par le dispositif attesteur d'identité 1 auprès de tiers.

Tous les comptes d'accès à la base de données 4 sont anonymes en ce sens que les identités réelles des titulaires des comptes d'accès à la base de données 4 ne sont pas connues des tiers à la simple lecture du contenu de la base de données 4. Un tiers lisant les données de transaction T(K,1=>2), T(K,2=>3) et T(K,3=>1) constate que K bitcoins sont successivement possédés par un premier compte, puis par un deuxième compte, puis par un troisième compte. Pour lire ces données de transaction, tout tiers peut utiliser la clé publique associée à chacun de ces comptes. Toutefois, le tiers ne sait pas l'identité du titulaire de chacun de ces trois comptes. En particulier, le tiers ne sait absolument pas que l'utilisateur U est l'un de ces titulaires.

Toutefois, l'utilisateur U peut vouloir révéler qu'il est bien titulaire de son compte à un tiers, auprès de qui il souhaite accroître sa réputation, par exemple une banque.

Par ailleurs, l'utilisateur U peut être titulaire de différents comptes. L'utilisateur U est par exemple titulaire d'un premier compte utilisé pour la mise en oeuvre du procédé qui précède impliquant les dispositifs 1 et 3, et titulaire d'un deuxième compte utilisé pour la mise en oeuvre du même procédé, mais impliquant un dispositif attesteur d'identité différent du dispositif 1 et un dispositif fournisseur de service différent du dispositif 3. Dans ce cas, l'utilisateur U, peut dévoiler auprès du tiers auprès de qui il souhaite accroître sa réputation seulement qu'il est titulaire d'un des premier et deuxièmes comptes, auquel cas il ne donne à ce tiers que des informations parcellaires le concernant. Alternativement, l'utilisateur peut dévoiler qu'il est titulaire des premier et deuxièmes comptes.

Par ailleurs, on a vu précédemment que les dispositifs 1, 2 et 3 disposent chacun un compte d'accès à la base de données 4. En particulier, il est prévu dans le mode de réalisation illustré en figure 2 qu'un utilisateur U accède au contenu de la base 4 en passant par un compte qu'il aura créé de sa propre initiative moyennant le dispositif client 2.

Dans un autre mode de réalisation, les dispositifs 1 et 3 disposent certes chacun d'un tel compte d'accès, mais aucun compte d'accès à la base de données publique 4 n'a besoin d'être est créé par l'utilisateur U. Dans ce mode de réalisation, le dispositif attesteur d'identité effectue une transaction vers d'un compte tiers prédéterminé, spécialement créé pour l'utilisateur U par le dispositif attesteur d'identité 1, ou bien vers lui-même.

Le dispositif attesteur d'identité 1 transmet alors au dispositif client 2, via un canal sécurisé, un message contenant des données de localisation permettant de localiser dans la base de données publique 4 les données protégées en confidentialité qui y ont été mémorisées sur ordre du dispositif attesteur d'identité 1. Ces données de localisation peuvent être une référence sur la transaction opérée par le dispositif 1, par exemple un ID blockchain. Ces données de localisation peuvent être ensuite transmises par le dispositif client 2 au dispositif de contrôle d'identité 3 pour permettre au dispositif de contrôle 3 de localiser les données protégées en confidentialité préalablement mémorisées sur ordre du dispositif attesteur d'identité 1.

## Revendications

**1.** Procédé de contrôle d'identité d'un utilisateur (U), comprenant les étapes suivantes mises en oeuvre par un dispositif de contrôle d'identité (3) :

- lecture dans une base de données publique de type chaîne de blocs (4) d'éventuelles données protégées en confidentialité préalablement générées par un dispositif attesteur d'identité (1) à partir d'un élément d'identité d'un utilisateur (U) et à partir d'au moins une donnée d'aléa propre à l'utilisateur (U),
- obtention, par le dispositif de contrôle d'identité (3), de données de preuve, les données de preuve ayant été préalablement générées (110) par un dispositif client (2) appartenant à l'utilisateur (U) à partir de l'élément d'identité de l'utilisateur (U) et de la donnée d'aléa propre à l'utilisateur (U), et les données de preuve étant obtenues par lecture des données de preuve dans la base de données publique (4),
- mise en oeuvre d'un traitement prédéterminé pour l'utilisateur (U) seulement si les conditions suivantes sont remplies :

  - les données protégées en confidentialité générées par le dispositif attesteur d'identité (1) sont associées dans la base de données publique (4) à des premières données de transaction indiquant que le dispositif attesteur d'identité (1) a transféré un montant prédéterminé d'une monnaie électronique à un bénéficiaire,

    ◦ les données de preuve lues sont associées, dans la base de données publique (4), aux données protégées en confidentialité préalablement générées par le dispositif attesteur d'identité (1),
    ◦ les données protégées en confidentialité trouvées et les données de preuve associées aux données protégées en confidentialité trouvées sont liées par une relation mathématique prédéterminée.

**2.** Procédé selon la revendication 1, dans lequel les données de preuve sont reçues par le dispositif de contrôle d'identité (3) via un canal sécurisé établi directement entre le dispositif client (2) et le dispositif de contrôle d'identité (3).

**3.** Procédé selon l'une des revendications 1 et 2, dans lequel les données protégées en confidentialité ont été générées par application d'une fonction de hachage prédéterminée $H$ à des données $x_0, \ldots, x_n$, où :

- $n$ est un entier supérieur ou égal à 2,
- au moins l'un des $x_i$ est une donnée d'aléa propre à l'utilisateur (U), et chaque autre $x_i$ est un élément d'identité de l'utilisateur (U),

et dans lequel les données de preuve comprennent :

- une donnée c calculée par la formule : $c = h(H(A_0, \ldots, A_n))$ où $h$ est une fonction prédéterminée, et $A_0, \ldots, A_n$ sont $n$ données tirées aléatoirement,
- $n$ données de preuve $f_0, \ldots, f_n$ calculées par application des formules

$$\forall i \in [\![0,n]\!] \quad f_i = A_i + cx_i$$

la relation mathématique prédéterminée étant en outre

$$h\left(\frac{H(f_0,\dots,f_n)}{\left(H(x_0,\dots,x_n)\right)^c}\right) = c$$

**4.** Procédé selon l'une des revendications 1 à 3, dans lequel :

- le bénéficiaire est l'utilisateur (U),
- les données de preuve sont associées dans la base de données publique (4) à des deuxièmes données de transaction indiquant que l'utilisateur (U) a transféré au dispositif de contrôle d'identité (3) le montant prédéterminé reçu du dispositif attesteur d'identité (1).

**5.** Procédé selon l'une des revendications précédentes, dans lequel le traitement prédéterminé est, comprend ou déclenche un service prédéterminé à fournir à l'utilisateur (U), le procédé comprenant par ailleurs une génération (124) et mémorisation (126) dans la base de données publique (4), de données de confirmation indiquant que le service a été fourni à l'utilisateur (U).

**6.** Procédé selon les revendications 4 et 5 prises en combinaison, dans lequel les données de confirmation générées sont associées dans la base de données publique (4) à des troisièmes données de transaction indiquant qu'un dispositif fournisseur de service ayant fourni le service à l'utilisateur (U) a transféré au dispositif attesteur d'identité (1) le montant prédéterminé.

**7.** Procédé selon l'une des revendications précédentes, comprenant en outre des étapes de

- après que le traitement prédéterminé a été mis en oeuvre par le dispositif de contrôle d'identité (3), génération (102) par le dispositif attesteur d'identité (1) de nouvelles données protégées en confidentialité à partir de l'élément d'identité de l'utilisateur (U) et d'au moins une nouvelle donnée d'aléa propre à l'utilisateur (U),
- mémorisation (108) des nouvelles données protégées en confidentialité dans la base de données publique (4) de sorte qu'une nouvelle mise en oeuvre de l'étape de vérification (120) utilise les nouvelles données protégées en confidentialité à la place des données protégées en confidentialité.

**8.** Procédé selon l'une des revendications précédentes, dans lequel les données protégées en confidentialité sont obtenues par application de la formule :

$$\prod_{i=0}^{n} G_i^{x_i}$$

où :

- $n$ est un entier supérieur ou égal à 2,
- au moins l'un des $x_i$ est une donnée d'aléa propre à l'utilisateur (U), et chaque autre $x_i$ est un élément d'identité de l'utilisateur (U),
- $G_i$ sont des éléments prédéterminés d'un groupe fini, par exemple des points de courbe elliptique ou des éléments d'un groupe cyclique.

**9.** Procédé selon l'une des revendications précédentes, dans lequel le traitement prédéterminé est mis en oeuvre par le dispositif de contrôle d'identité (3) seulement si le dispositif de contrôle d'identité (3) ne trouve pas, dans la base de données publique (4), de données de révocation indiquant qu'une clé privée de l'utilisateur (U) a été révoquée par le dispositif attesteur d'identité (1).

**10.** Produit programme d'ordinateur comprenant des instructions de code de programme pour l'exécution des étapes du procédé selon l'une des revendications précédentes, lorsque ce programme est exécuté par au moins un processeur.

**11.** Dispositif de contrôle d'identité (3) pour contrôler l'identité d'un utilisateur (U), le dispositif de contrôle d'identité (3) comprenant une interface de communication avec une base de données publique de type chaîne de blocs (4) et au moins un processeur configuré pour :

- commander la lecture, dans la base de données publique (4), d'éventuelles données protégées en confidentialité préalablement générées par un dispositif attesteur d'identité (1) à partir d'un élément d'identité de l'utilisateur (U) et à partir d'au moins une donnée d'aléa propre à l'utilisateur (U),
- obtenir des données de preuve ayant été préalablement générées (110) par un dispositif client (2) appartenant à l'utilisateur (U) à partir de l'élément d'identité de l'utilisateur (U) et de la donnée d'aléa propre à l'utilisateur (U), les données de preuve étant obtenues par lecture des données de preuve dans la base de données publique (4),
- mettre en oeuvre un traitement prédéterminé pour l'utilisateur seulement si les conditions suivantes sont remplies :

- les données protégées en confidentialité générées par le dispositif attesteur d'identité (1) sont associées dans la base de données publique (4) à des premières données de transaction indiquant que le dispositif attesteur d'identité (1) a transféré un montant prédéterminé d'une monnaie électronique à un bénéficiaire,

◦ les données de preuve lues sont associées, dans la base de données publique (4), aux données protégées en confidentialité préalablement générées par le dispositif attesteur d'identité (1), client (2) destiné à appartenir à un utilisateur (U), le dispositif client
◦ les données protégées en confidentialité trouvées et les données de preuve associées aux données protégées en confidentialité trouvées sont liées par une relation mathématique prédéterminée.

**12.** Système comprenant un dispositif de contrôle d'identité (3) selon la revendication précédente et un dispositif client (2) destiné à appartenir à un utilisateur (U), le dispositif client comprenant :

• une interface de communication avec la base de données publique (4),
• au moins un processeur configuré pour :

◦ générer les données de preuve à partir d'un élément d'identité de l'utilisateur (U) et d'au moins une donnée d'aléa propre à l'utilisateur (U),
◦ commander une mémorisation (112), dans la base de données publique (4), des données de preuve de façon à indiquer que les données de preuve ont été générées par le dispositif client (2), et en association avec des données protégées en confidentialité préalablement générées par le dispositif attesteur d'identité (1) à partir d'un même élément d'identité et d'une même donnée d'aléa.

**Patentansprüche**

**1.** Verfahren zur Kontrolle der Identität eines Benutzers (U), umfassend die folgenden, von einer Identitätskontrollvorrichtung (3) durchgeführten Schritte:

• Lesen in einer öffentlichen Datenbank vom Typ Blockchain (4) von etwaigen vertraulichkeitsgeschützten Daten, die zuvor von einer identitätsbescheinigenden Vorrichtung (1) anhand eines Identitätselements eines Benutzers (U) und anhand mindestens eines für den Benutzer (U) spezifischen Zufallsdatenelements erzeugt wurden,
• Erhalten, durch die Identitätskontrollvorrichtung (3), von Beweisdaten, wobei die Beweisdaten zuvor von einer Client-Vorrichtung (2), die dem Benutzer (U) gehört, anhand des Identitätselements des Benutzers (U) und des für den Benutzer (U) spezifischen Zufallsdatenelements erzeugt (110) wurden und wobei die Beweisdaten durch Lesen der Beweisdaten in der öffentlichen Datenbank (4) erhalten werden,
• Durchführen einer vorbestimmten Verarbeitung für den Benutzer (U) nur dann, wenn die folgenden Bedingungen erfüllt sind:

- die von der identitätsbescheinigenden Vorrichtung (1) erzeugten vertraulichkeitsgeschützten Daten sind in der öffentlichen Datenbank (4) ersten Transaktionsdaten zugeordnet, die angeben, dass die identitätsbescheinigende Vorrichtung (1) einen vorbestimmten Betrag einer elektronischen Währung an einen Begünstigten transferiert hat,

◦ die gelesenen Beweisdaten sind, in der öffentlichen Datenbank (4), den von der identitätsbescheinigenden Vorrichtung (1) zuvor erzeugten vertraulichkeitsgeschützten Daten zugeordnet,
◦ die gefundenen vertraulichkeitsgeschützten Daten und die Beweisdaten, die den gefundenen vertraulichkeitsgeschützten Daten zugeordnet sind, sind durch eine vorbestimmte mathematische Beziehung verknüpft.

**2.** Verfahren nach Anspruch 1, bei dem die Beweisdaten von der identitätsbescheinigenden Vorrichtung (3) über einen gesicherten Kanal empfangen werden, der direkt zwischen der Client-Vorrichtung (2) und der identitätsbescheinigenden Vorrichtung (3) aufgebaut ist.

**3.** Verfahren nach einem der Ansprüche 1 und 2, bei dem die vertraulichkeitsgeschützten Daten durch Anwenden einer vorbestimmten Hash-Funktion $H$ auf Daten $x_0, \ldots, x_n$ erzeugt wurden, wobei:

• $n$ eine ganze Zahl größer oder gleich 2 ist,
• mindestens eines der $x_i$ ein für den Benutzer (U) spezifisches Zufallsdatenelement ist und das andere $x_i$ ein Identitätselement des Benutzers (U) ist,
und bei dem die Beweisdaten umfassen:

• ein Datenelement ***c***, das berechnet wird durch die Formel: **c =** $h(H(A_0, \ldots, A_n))$ worin ***h*** eine vorbestimmte Funktion ist und $A_0, \ldots, A_n$ ***n*** zufällig gezogene Datenelemente sind,

• ***n*** Beweisdaten $f_0, \ldots, f_n$, die berechnet werden durch Anwenden der Formeln

$$\forall i \in [\![0, n]\!] \qquad f_i = A_i + cx_i$$

wobei die vorbestimmte mathematische Beziehung ferner ist

$$h\left(\frac{H(f_0, \ldots, f_n)}{\left(H(x_0, \ldots, x_n)\right)^c}\right) = c$$

**4.** Verfahren nach einem der Ansprüche 1 bis 3, bei dem:

• der Begünstigte der Benutzer (U) ist,

• die Beweisdaten in der öffentlichen Datenbank (4) zweiten Transaktionsdaten zugeordnet sind, die angeben, dass der Benutzer (U) an die Identitätskontrollvorrichtung (3) den von der identitätsbescheinigenden Vorrichtung (1) empfangenen vorbestimmten Betrag transferiert hat.

**5.** Verfahren nach einem der vorhergehenden Ansprüche, bei dem die vorbestimmte Verarbeitung eine vorbestimmte Dienstleistung ist, umfasst oder auslöst, die dem Benutzer (U) zu erbringen ist, wobei das Verfahren im Übrigen ein Erzeugen (124) und Speichern (126) in der öffentlichen Datenbank (4) von Bestätigungsdaten umfasst, die angeben, dass die Dienstleistung dem Benutzer (U) erbracht worden ist.

**6.** Verfahren nach einer Kombination der Ansprüche 4 und 5, bei dem die erzeugten Bestätigungsdaten in der öffentlichen Datenbank (4) dritten Transaktionsdaten zugeordnet sind, die angeben, dass eine dienstleistungserbringende Vorrichtung, die dem Benutzer (U) die Dienstleistung erbracht hat, den vorbestimmten Betrag an die identitätsbescheinigende Vorrichtung (1) transferiert hat.

**7.** Verfahren nach einem der vorhergehenden Ansprüche, umfassend ferner die Schritte

• nachdem die vorbestimmte Verarbeitung von der Identitätskontrollvorrichtung (3) durchgeführt worden ist, Erzeugen (102), durch die identitätsbescheinigende Vorrichtung (1), neuer vertraulichkeitsgeschützter Daten anhand des Identitätselements des Benutzers (U) und mindestens eines neuen für den Benutzer (U) spezifischen Zufallsdatenelements,

• Speichern (108) der neuen vertraulichkeitsgeschützten Daten in der öffentlichen Datenbank (4), so dass eine erneute Durchführung des Verifizierungsschritts (120) anstelle der vertraulichkeitsgeschützten Daten die neuen vertraulichkeitsgeschützten Daten verwendet.

**8.** Verfahren nach einem der vorhergehenden Ansprüche, bei dem die vertraulichkeitsgeschützten Daten erhalten werden durch Anwenden der Formel:

$$\prod_{i=0}^{n} G_i^{x_i}$$

worin:

• ***n*** eine ganze Zahl größer oder gleich 2 ist,

• mindestens eines der $x_i$ ein für den Benutzer (U) spezifisches Zufallsdatenelement ist und das andere $x_i$ ein Identitätselement des Benutzers (U) ist,

• $G_i$ vorbestimmte Elemente einer finiten Gruppe sind, zum Beispiel Punkte einer elliptischen Kurve oder Elemente einer zyklischen Gruppe.

**9.** Verfahren nach einem der vorhergehenden Ansprüche, bei dem die vorbestimmte Verarbeitung von der Identitätskontrollvorrichtung (3) nur dann durchgeführt wird, wenn die Identitätskontrollvorrichtung (3) in der öffentlichen Datenbank (4) keine Widerrufsdaten findet, die angeben, dass ein privater Schlüssen des Benutzers (U) von der identitätsbescheinigenden Vorrichtung (1) widerrufen worden ist.

**10.** Computerprogrammprodukt, das Programmcodeanweisungen umfasst, die bei der Ausführung des Programms durch mindestens einen Prozessor die Schritte des Verfahrens nach einem der vorhergehenden Ansprüche ausführen.

**11.** Identitätskontrollvorrichtung (3) zum Kontrollieren der Identität eines Benutzers (U), wobei die Identitätskontrollvorrichtung (3) eine Kommunikationsschnittstelle mit einer öffentlichen Datenbank vom Typ Blockchain (4) umfasst und mindestens einen Prozessor, der dazu konfiguriert ist:

• das Lesen, in einer öffentlichen Datenbank (4), von etwaigen vertraulichkeitsgeschützten Daten zu steuern, die zuvor von einer identitätsbescheinigenden Vorrichtung (1) anhand eines Identitätselements eines Benutzers (U) und anhand mindestens eines für den Benutzer (U) spezifischen Zufallsdatenelements erzeugt wurden,

• Beweisdaten zu erhalten, die zuvor von einer Client-Vorrichtung (2), die dem Benutzer (U) gehört, anhand des Identitätselements des Benutzers (U) und des für den Benutzer (U) spezifischen Zufallsdatenelements erzeugt (110) worden sind, wobei die Beweisdaten durch Lesen der Beweisdaten in der öffentlichen Datenbank (4) erhalten werden,

• Durchführen einer vorbestimmten Verarbeitung für den Benutzer nur dann, wenn die folgenden Bedingungen erfüllt sind:

- die von der identitätsbescheinigenden Vorrichtung (1) erzeugten vertraulichkeitsgeschützten Daten sind in der öffentlichen Datenbank (4) ersten Transaktionsdaten zugeordnet, die angeben, dass die identitätsbescheinigende Vorrichtung (1) einen vorbestimmten Betrag einer elektronischen Währung an einen Begünstigten transferiert hat,

◦ die gelesenen Beweisdaten sind, in der öffentlichen Datenbank (4), den von der identitätsbescheinigenden Vorrichtung (1) zuvor erzeugten vertraulichkeitsgeschützten Daten zugeordnet,

◦ die gefundenen vertraulichkeitsgeschützten Daten und die Beweisdaten, die den gefundenen vertraulichkeitsgeschützten Daten zugeordnet sind, sind durch eine vorbestimmte mathematische Beziehung verknüpft.

**12.** System, umfassend eine Identitätskontrollvorrichtung (3) nach dem vorhergehenden Anspruch und eine Client-Vorrichtung (2), die dazu bestimmt ist, einem Benutzer (U) zu gehören, wobei die Client-Vorrichtung umfasst:

• eine Kommunikationsschnittstelle mit der öffentlichen Datenbank (4),

• mindestens einen Prozessor, der dazu konfiguriert ist:

◦ die Beweisdaten anhand eines Identitätselements des Benutzers (U) und mindestens eines für den Benutzer (U) spezifischen Zufallsdatenelements zu erzeugen,

◦ eine Speicherung (112), in der öffentlichen Datenbank (4), der Beweisdaten zu steuern, so dass angegeben wird, dass die Beweisdaten von der Client-Vorrichtung (2) erzeugt worden sind, und unter Zuordnung zu vertraulichkeitsgeschützten Daten, die zuvor von der identitätsbescheinigenden Vorrichtung (1) anhand eines selben Identitätselements und eines selben Zufallsdatenelements erzeugt wurden.

## Claims

**1.** Method for checking the identity of a user (U), comprising the following steps implemented by an identity-checking device (3):

• reading if there, from a public blockchain (4), confidentiality-protected data generated beforehand, by an identity-attesting device (1), from an identity element of a user (U) and from at least one random datum specific to the user (U),

• obtaining proof data, the proof data having been generated (110) beforehand, by a client device (2) belonging to the user (U), from the identity element of the user (U) and from the random datum specific to the user (U), and the proof data being obtained by reading proof data from the public blockchain (4) ,

• implementing predetermined processing for the user (U) only if the following conditions are met:

- the confidentiality-protected data generated by the identity-attesting device (1) are associated in the public blockchain (4) with first transaction data indicating that the identity-attesting device (1) has transferred a predetermined amount of a digital currency to a recipient,

- the read proof data are associated, in the public blockchain (4), with confidentiality-protected data generated beforehand by the identity-attesting device (1),

- the found confidentiality-protected data and the proof data associated with the found confidentiality-protected data are related by a predetermined mathematical relationship.

**2.** Method according to Claim 1, wherein the proof data are received by the identity-checking device (3) via a secure channel set up directly between the client device (2) and the identity-checking device (3).

**3.** Method according to one of Claims 1 and 2, wherein the confidentiality-protected data are generated by applying a predetermined hash function $\boldsymbol{H}$ to data $\boldsymbol{x_0, \dots , x_n}$, where:

• $\boldsymbol{n}$ is an integer higher than or equal to 2,

• at least one of the $\boldsymbol{x_i}$ is a random datum specific to the user (U), and each other $\boldsymbol{x_i}$ is an identity element of the user (U),

and wherein the proof data comprise:

- a datum $c$ computed using the formula: $c = h(H(A_0, \ldots, A_n))$, where $h$ is a predetermined function, and $A_0, \ldots, A_n$ are $n$ randomly drawn data,
- $n$ proof data $f_0, \ldots, f_n$ computed by applying formulae

$$\forall i \in [\![0, n]\!] \quad f_i = A_i + cx_i$$

the predetermined mathematical relationship further being

$$h\left(\frac{H(f_0, \ldots, f_n)}{\left(H(x_0, \ldots, x_n)\right)^c}\right) = c$$

**4.** Method according to one of Claims 1 to 3, wherein:

- the recipient is the user (U),
- the proof data are associated, in the public blockchain (4), with second transaction data indicating that the user (U) has transferred, to the identity-checking device (3), the predetermined amount received from the identity-attesting device (1) .

**5.** Method according to one of the preceding claims, wherein the predetermined processing is, comprises or causes initiation of a predetermined service to be provided to the user (U), the method moreover comprising generating (124) and storing (126), in the public blockchain (4), confirmation data indicating that the service has been provided to the user (U).

**6.** Method according to Claims 4 and 5 in combination, wherein the generated confirmation data are associated, in the public blockchain (4), with third transaction data indicating that a service-providing device that provided the service to the user (U) has transferred, to the identity-attesting device (1), the predetermined amount.

**7.** Method according to one of the preceding claims, further comprising steps of:

- after the predetermined processing has been implemented by the identity-checking device (3), generating (102), by means of the identity-attesting device (1), new confidentiality-protected data from the identity element of the user (U) and from at least one new random datum specific to the user (U),
- storing (108) new confidentiality-protected data in the public blockchain (4) so that the next time the verifying step (120) is implemented the new confidentiality-protected data are used instead of the confidentiality-protected data.

**8.** Method according to one of the preceding claims, wherein the confidentiality-protected data are obtained by applying the formula:

$$\prod_{i=0}^{n} {G_i}^{x_i}$$

where:

- $n$ is an integer higher than or equal to 2,
- at least one of the $x_i$ is a random datum specific to the user (U), and each other $x_i$ is an identity element of the user (U),
- $G_i$ are predetermined elements of a finite group, for example points of an elliptic curve or elements of a cyclic group.

**9.** Method according to one of the preceding claims, wherein the predetermined processing is implemented by the identity-checking device (3) only if the identity-checking device (3) does not find, in the public blockchain (4), revocation data indicating that a private key of the user (U) has been revoked by the identity-attesting device (1).

**10.** Computer program product comprising program-code instructions for executing steps of the method according to one of the preceding claims, when this program is executed by at least one processor.

**11.** Identity-checking device (3) for checking the identity of a user (U), the identity-checking device (3) comprising an interface for communicating with a public blockchain (4) and at least one processor configured to:

- command if there confidentiality-protected data generated beforehand, by an identity-attesting device (1), from an identity element of a user (U) and from at least one random datum specific to the user (U), to be read from the public blockchain (4),
- obtain proof data having been generated (110) beforehand, by a client device (2) belonging to the user (U), from the identity element of the user (U) and from the random datum specific to the user (U), the proof data being obtained by reading proof data from the public blockchain (4),
- implement predetermined processing for the user only if the following conditions are met:

  - the confidentiality-protected data generated by the identity-attesting device (1) are associated in the public blockchain (4) with first transaction data indicating that the identity-attesting device (1) has transferred a predetermined amount of a digital currency to a recipient,
- the read proof data are associated, in the public blockchain (4), with confidentiality-protected data generated beforehand by the identity-attesting device (1),
- the found confidentiality-protected data and the proof data associated with the found confidentiality-protected data are related by a predetermined mathematical relationship.

**12.** System comprising an identity-checking device (3) according to the preceding claim, and a client device (2) intended to belong to a user (U), the client device comprising:

• an interface for communicating with the public blockchain (4),
• at least one processor configured to:

◦ generating the proof data from an identity element of the user (U) and from at least one random datum specific to the user (U),
◦ commanding proof data to be stored (112) in the public blockchain (4), in such a way as to indicate that the proof data have been generated by the client device (2), and in association with confidentiality-protected data generated beforehand by the identity-attesting device (1) from the same identity element and from the same random datum.

1
3
4
R
2
U

FIG. 1

1
2
3
4
enrôlement
100
Tirage élément d'aléa
102
104
Génération données chiffrées
106
T(K, 1=>2)
108
Génération données de preuve
110
T(K, 2=>3)
112
Génération demande de service
114
116
Vérification de conditions
120
118
Fourniture service
122
Génération données de confirmation
124
T(K, 3=>1)
126
128
Tirage nouvel élément d'aléa
102

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20160072800 A
- US 20160105414 A
- WO 2016128906 A

### Littérature non-brevet citée dans la description

- **DAVID CHAUM.** Crytographically Strong undeniable Signatures, Unconditionally Secure for the Signer
- **STEFAN BRANDS.** *Rethinking Public Key Infrastructures and Digital Certificates: Building in Privacy*